# EUROPEAN PATENT APPLICATION

(11) **EP 4 635 786 A1**
(43) Date of publication of application: **22.10.2025**
(21) Application number: 24170989.8
(22) Date of filing: 18.04.2024
(51) Int. Cl.: B60L 53/53, B60L 53/63, B60L 55/00, H02J 3/32, B60L 53/62, B60L 53/14

(54) **ELECTRIC VEHICLE CHARGING SYSTEM AND METHOD**

(71) Applicant: Shell Internationale Research Maatschappij B.V., 2596 HR The Hague (NL)
(72) Inventor: JOSEPH, Peter Koikkara, 1031 HW Amsterdam (NL); IMMANENI, Anitha, HW Amsterdam (NL)
(74) Representative: Shell Legal Services IP

(57) **Abstract**

This invention provides an electric vehicle charging system (100) comprising a bidirectional charger (110), a grid connection (300), a battery energy storage system (120), and a controller (130). The bidirectional charger (110) couples the charging system (100) to a charger inlet (210) of an electric vehicle (200). The battery energy storage system (120) is separate from the electric vehicle (200) and couples to the grid connection (300). The controller (130is configured to receive a boundary condition for reduced battery degradation of a battery (220) of the electric vehicle (200), to receive, from the electrical power grid (300), a demand for electrical power from the electric vehicle charging system (100), and to simultaneously discharge the battery energy storage system (120) and the battery (220) of the electric vehicle (200) to the electrical power grid (300) in dependence of the demand for electrical power and the boundary condition.

## Description

### Field of the Invention

This invention relates to an electric vehicle charging system comprising a bidirectional charger for allowing a battery of the electric vehicle to charge from and discharge to an electrical power grid. The invention further relates to a method for use in such an electric vehicle charging system.

### Background of the invention

In recent decades many industries have been working on decarbonizing their energy needs. For example, electric vehicles and plug-in hybrids are taking over market share from vehicles with internal combustion engines. Buildings switch from natural gas powered heating to electrical heating. This decarbonization process challenges the capacity and flexibility of the existing electrical power grid by an increased and more variable demand for electricity. Electric vehicles are often charged in the evening when people are at home and need electricity for heating, cooking, washing, light, and other appliances too.

In the meantime, renewable energy sources such as solar and wind power are increasingly used for generating electricity, while coal plants are closed. Because such renewable energy sources are dependent on weather conditions, the time of day, and the day in the year, the supply of electrical energy can be highly variable too.

With the supply of solar energy typically being at its peak mid-day, when demand may be lower, there is a need for balancing measures that can counteract the high peaks in supply and demand of electrical energy. One of the balancing measures that is used for this purpose is the use of battery energy storage systems that are charged in times of surplus supply and discharged in times of surplus demand. Because large capacity battery energy storage systems can be expensive and space-consuming, it has been proposed to use the relatively large storage capacity of batteries of temporarily inactive electric vehicles for such balancing too. However, the repeated charge-discharge cycles of the vehicles' batteries lead to degradation of the batteries, which may result in reductions of the lifespan of the batteries and of the maximum distance the vehicle can be driven without requiring the batteries to be recharged.

It is an aim of the current invention to overcome at least some of the disadvantages of the prior art discussed above.

### Summary of the Invention

According to an aspect of the invention, an electric vehicle charging system is provided comprising a bidirectional charger, a grid connection, a battery energy storage system, and a controller. The bidirectional charger is configured for connecting the charging system to a charger inlet of an electric vehicle. The grid connection couples the charging system to an electrical power grid. The battery energy storage system is provided separately from the electric vehicle and is coupled to the grid connection. The controller is operably connected to the bidirectional charger and the battery energy storage system. The controller is configured to receive a boundary condition for reduced battery degradation of a battery of the electric vehicle, to receive, from the electrical power grid, a demand for electrical power from the electric vehicle charging system, and to simultaneously discharge the battery energy storage system and the battery of the electric vehicle to the electrical power grid in dependence of the demand for electrical power and the boundary condition.

By taking into account the boundary condition for the battery of the respective electric vehicle, it is made possible to use the battery of the electric vehicle for delivering electrical energy stored therein to the electrical power grid when needed with only little or no battery degradation at all. The simultaneous discharging of the battery energy storage system to the electrical power grid makes it possible to continue to meet the demands of the power grid, even when the boundary condition prescribes that, e.g., the discharge rate of electric vehicle's battery has to be limited. Accordingly, with the system of the invention, the battery of the electric vehicle can be used for supplying power to the electrical grid when needed, without risking early and excessive battery degradation.

Exemplary boundary conditions that may be used include a maximum charge or discharge rate, a preferred charge or discharge rate, a maximum charge capacity, a minimum charge capacity, and a preferred charge capacity. All such boundary conditions may be fixed values, or may depend on other variables, such as a battery age, current temperature, or moisture level. The boundary conditions may further depend on the battery's recent charging history. For example, the maximum charge or discharge rate may be at a certain level X for a first set amount of time, after which it is to be reduced to a level Y < X for a second set amount of time, before it is allowed to return to the higher level X.

In an embodiment of the electric vehicle charging system, the battery energy storage system is coupled to the grid connection through the bidirectional charger. Alternatively, the battery energy storage system may be directly connected to the grid connection, in parallel with the bidirectional charger.

The controller of the electric vehicle charging system may further be configured to receive, from the electrical power grid, a request to store electrical energy, and to simultaneously charge the battery energy storage system and the battery of the electric vehicle in dependence of the request to store electrical energy and the boundary condition.

When the controller receives a request from the electrical power grid to store electrical energy, the energy may thus be partly stored in the battery of the electric vehicle and partly in the battery energy storage system, in proportions that allow the bidirectional charger to charge the battery of the electric vehicle while keeping within the boundary condition. Optionally, if the user plans to use the electric vehicle on short term, the boundary condition may be temporarily overruled to ensure that the vehicle's battery is fully charged when the vehicle is decoupled from the charger and driven away.

Optionally, the controller is further configured to discharge the battery energy storage system through the bidirectional charger while the bidirectional charger charges the battery of the electric vehicle. This allows the electric vehicle battery to be charged in periods of high electricity demand, with minimal use of electrical power delivered directly from the electrical power grid.

The controller may receive the boundary condition from the bidirectional charger. The boundary condition may be vehicle-specific, specific for certain types of vehicles, or the same for all vehicles. The boundary condition may be stored in a digital memory of the bidirectional charger, for example in a data table. Alternatively, the boundary condition may be calculated based on one or more input variables.

The bidirectional charger may receive the boundary condition from the electric vehicle, for example through a wired data connection that is established when a charger cable of the bidirectional charger is plugged into the charger inlet of the electric vehicle. Alternatively, the boundary condition is communicated through a wireless data connection. Receiving the boundary condition from the electric vehicle itself ensures that the optimal boundary condition may be set for every different electric vehicle.

The controller may, e.g., be located in the bidirectional charger. Alternatively, the controller may be located in the battery energy storage system or in a standalone management module of the electric vehicle charging system.

According to another aspect of the invention, a method is provided for controlling an electric vehicle charging system. The method comprises steps of:
- receiving a boundary condition for reduced battery degradation of a battery of an electric vehicle,
- receiving, from an electrical power grid, a demand for electrical power from the electric vehicle charging system, and
- simultaneously discharging a battery energy storage system of the electric vehicle charging system and the battery of the electric vehicle to the electrical power grid in dependence of the demand for electrical power and the boundary condition.

According to yet another aspect of the invention, a computer program product is provided, comprising machine readable instructions which, when executed by a computer, are arranged to perform such a method.

### Brief Description of the Drawings

Figure 1 schematically illustrates a first embodiment of an electric vehicle charging system according to the invention.
Figure 2 schematically illustrates a second embodiment of an electric vehicle charging system according to the invention.

These drawings depict one or more implementations in accordance with the present teachings , by way of example only, not by way of limitation. In the figures, like reference numerals refer to the same or similar elements.

### Detailed Description of the Drawings

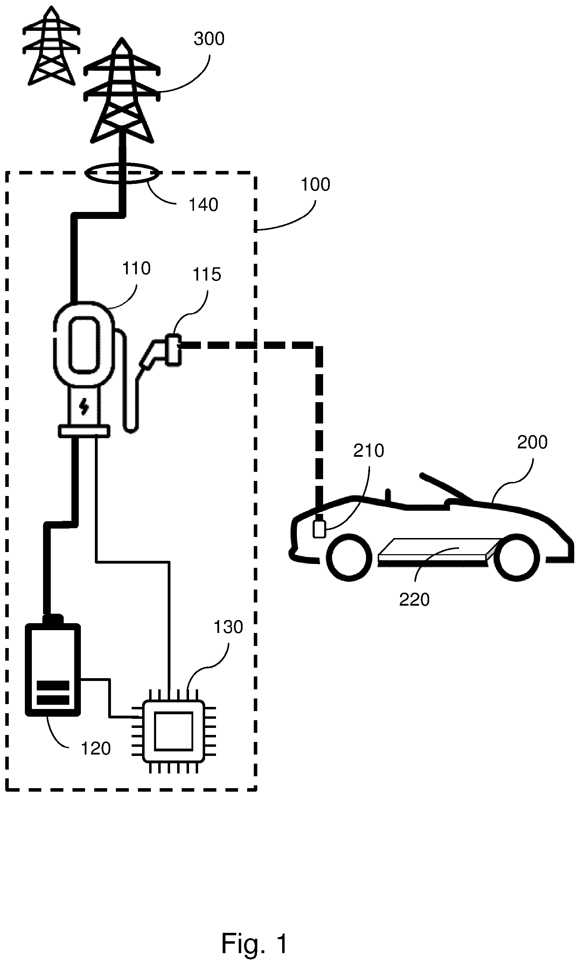

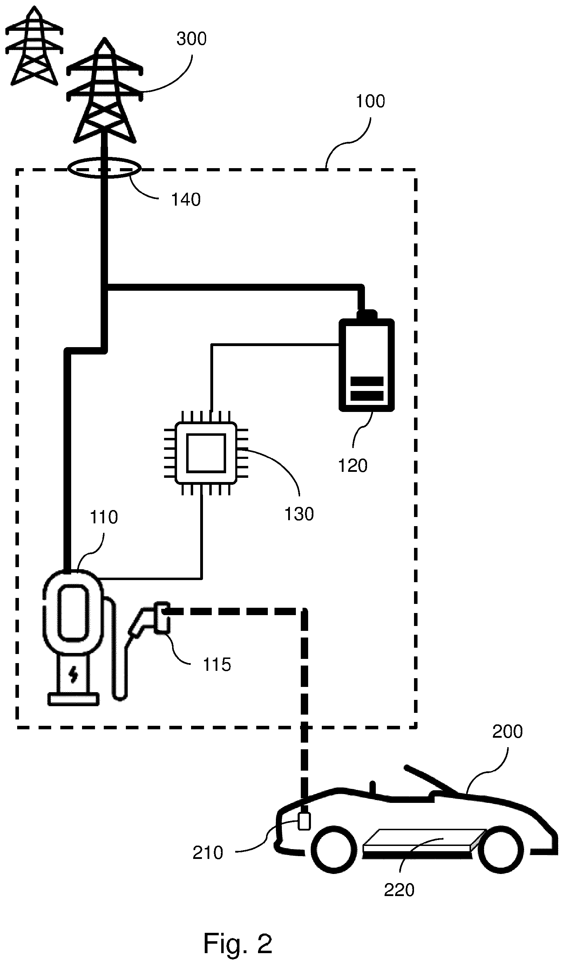

Figures 1 and 2 schematically illustrate two embodiments of electric vehicle charging systems 100 according to the invention. In both embodiments, the electric vehicle charging system 100 comprises a bidirectional charger 110, a grid connection 140, a battery energy storage system 120, and a system controller 130. The main difference between the two embodiments is that in Figure 1 the battery energy storage system 120 is coupled to the grid connection through the bidirectional charger 110, while in Figure 2 the battery energy storage system 120 is directly connected to the grid connection 140, in parallel with the bidirectional charger 110. It is noted that the embodiments of Figures 1 and 2 are provided as simplified and exemplary embodiments only. In practice, the electric vehicle charging system 100 may, for example, comprise multiple bidirectional chargers 110 and battery energy storage systems 120. The individual bidirectional chargers 110, as well as the battery energy storage systems 130, may be of different types and are not necessarily all located in the same physical location. To constitute a single electric vehicle 100

The bidirectional charger 110 comprises a charger plug 115 that is configured for connecting the charging system 100 to a charger inlet 210 of an electric vehicle 200. The bidirectional charger 210 may be located in any location where users of electric vehicles 200 come to for charging or long-term parking. The bidirectional charger 110 may, for example, be located at the user's home, an office parking, an airport parking, or a public charging station. While the user will typically plug in the charger plug 115 of the bidirectional charger 110 to ensure that the battery pack 220 of the electric vehicle 200 is fully charged when the vehicle 200 is needed to drive to a different location, the electric vehicle charging system 100 described herein allows the battery pack 220 of the vehicle 200 to be used for on-demand delivery of electrical energy to the power grid 300 during the period wherein the vehicle 200 is not needed for driving.

The grid connection 140 of the electric vehicle charging system 100 couples the charging system 100 to the electrical power grid 300. The battery energy storage system 120 is provided separately from the electric vehicle and is coupled to the grid connection 140, directly as in Figure 2, or via the bidirectional charger 110 as in Figure 1.

The system controller 130 is operably connected to the bidirectional charger 110 and the battery energy storage system 120. The system controller 130 may, e.g., be located in the bidirectional charger 110 and is combined with or operably connected to a charger controller of the bidirectional charger 110 itself. Alternatively, the system controller 130 may be located in the battery energy storage system 120 or in a standalone management module of the electric vehicle charging system 100.

The system controller 130 is configured to receive a boundary condition for reduced battery degradation of the battery pack 220 of the electric vehicle 200. From the electrical power grid 300, the system controller receives a demand for electrical power to be provided by the electric vehicle charging system 100. In prior art bidirectional charging systems 100 would then typically use the vehicle's battery pack 200 as an energy buffer, discharging to the electrical grid 300 when there is a demand for electrical energy and recharging when there is a surplus of electrical energy on the electrical grid 300. In the embodiments described herein, however, the batteries 200 of the electric vehicle 200 and the battery energy storage system 120 are controlled to simultaneously discharge to the electrical power grid 300 in dependence of the demand for electrical power and the boundary condition for reduced battery degradation of the vehicle batteries 200.

Exemplary boundary conditions that may be used include a maximum charge or discharge rate, a preferred charge or discharge rate, a maximum charge capacity, a minimum charge capacity, and a preferred charge capacity. All such boundary conditions may be fixed values, or may depend on other variables, such as a battery age, current temperature, or moisture level. The boundary conditions may further depend on the battery's recent charging history. For example, the maximum charge or discharge rate may be at a certain level X for a first set amount of time, after which it is to be reduced to a level Y < X for a second set amount of time, before it is allowed to return to the higher level X.

By taking into account the boundary conditions for the batteries 220 of the electric vehicle 200, it is made possible to use the electric vehicle's battery pack 220 for delivering electrical energy stored therein to the electrical power grid 300 when needed with only little or no battery degradation at all. The simultaneous discharging of the battery energy storage system 120 to the electrical power grid 300 makes it possible to continue to meet the demands of the power grid 300, even when the boundary condition prescribes that, e.g., the discharge rate of electric vehicle's batteries 220 has to be limited. Accordingly, with the electric vehicle charging systems 100 of Figures 1 and 2, the batteries 220 of the electric vehicle 200 can be used for supplying power to the electrical grid 300 when needed, without risking early and excessive battery degradation.

The controller 130 of the electric vehicle charging system 100 may further be configured to receive, from the electrical power grid 300, a request to store electrical energy. Based on this request and the boundary condition for the vehicle's batteries 220, the system controller 130 may then simultaneously charge the battery energy storage system 120 and the batteries 220 of the electric vehicle 200. The surplus electrical energy from the power grid 300 may thus be partly stored in the battery 220 of the electric vehicle 200 and partly in the battery energy storage system 120, in proportions that allow the bidirectional charger 110 to charge the batteries 220 of the electric vehicle 200 while keeping within the boundary condition. Optionally, if the user plans to use the electric vehicle 200 on short term, the boundary condition may be temporarily overruled to ensure that the vehicle's batteries 220 are fully charged when the vehicle 200 is decoupled from the charger 110 and driven away.

Optionally, the system controller 130 is further configured to discharge the battery energy storage system 120 through the bidirectional charger 110 while the bidirectional charger 110 charges the batteries 220 of the electric vehicle 200. This allows the electric vehicle batteries 220 to be charged in periods of high electricity demand, with minimal use of electrical power delivered directly from the electrical power grid 300.

The system controller 130 may receive the boundary condition from the bidirectional charger 110. The boundary condition may be vehicle-specific, specific for certain types of vehicles, or the same for all vehicles. The boundary condition may be stored in a digital memory of the bidirectional charger 110, for example in a data table. Alternatively, the boundary condition may be calculated based on one or more input variables.

The bidirectional charger 110 may receive the boundary condition from the electric vehicle 200, for example through a wired data connection that is established when a charger cable 115 of the bidirectional charger 110 is plugged into the charger inlet 210 of the electric vehicle. Alternatively, the boundary condition is communicated through a wireless data connection. Receiving the boundary condition from the electric vehicle 200 itself ensures that the optimal boundary condition may be set for every different electric vehicle 200.

While many possible variations of the electric vehicle charging system 100 have been described above, it will be clear to the skilled person that additional variations and modifications can be made without departing from the scope of the invention as claimed in the appended claims.

## Claims

1. An electric vehicle charging system (100) comprising:
- a bidirectional charger (110) for connecting the charging system (100) to a charger inlet (210) of an electric vehicle (200),
- a grid connection (300) for connecting the charging system (100) to an electrical power grid (300),
- a battery energy storage system (120), separate from the electric vehicle (200), and coupled to the grid connection (300), and
- a controller (130), operably connected to the bidirectional charger (110) and the battery energy storage system (120), and configured to:
- receive a boundary condition for reduced battery degradation of a battery (220) of the electric vehicle (200),
- receive, from the electrical power grid (300), a demand for electrical power from the electric vehicle charging system (100), and
- simultaneously discharge the battery energy storage system (120) and the battery (220) of the electric vehicle (200) to the electrical power grid (300) in dependence of the demand for electrical power and the boundary condition.

2. An electric vehicle charging system (100) as claimed in Claim 1, wherein the battery energy storage system (120) is coupled to the grid connection (300) through the bidirectional charger (110).

3. An electric vehicle charging system (100) as claimed in Claim 1 or 2, wherein the controller (130) is further configured to
- receive, from the electrical power grid (300), a request to store electrical energy, and
- simultaneously charge the battery energy storage system (120) and the battery (220) of the electric vehicle (200) in dependence of the request to store electrical energy and the boundary condition.

4. An electric vehicle charging system (100) as claimed in any preceding Claim, wherein the controller (130) is further configured to discharge the battery energy storage through the bidirectional charger (110) while the bidirectional charger (110) charges the battery (220) of the electric vehicle (200).

5. An electric vehicle charging system (100) as claimed in any preceding Claim, wherein the controller (130) is further configured to receive the boundary condition from the bidirectional charger (110).

6. An electric vehicle charging system (100) as claimed in Claim 5, wherein the bidirectional charger (110) is configured to receive the boundary condition from the electric vehicle (200).

7. An electric vehicle charging system (100) as claimed in any preceding Claim, wherein the controller (130) is located in the bidirectional charger (110).

8. An electric vehicle charging system (100) as claimed in any preceding Claim, wherein the boundary condition comprises at least one of:
- a maximum charge or discharge rate,
- a preferred charge or discharge rate,
- a maximum charge capacity,
- a minimum charge capacity, and
- a preferred charge capacity.

9. A method of controlling an electric vehicle charging system (100), the method comprising steps of:
- receiving a boundary condition for reduced battery degradation of a battery of an electric vehicle (200),
- receiving, from an electrical power grid (300), a demand for electrical power from the electric vehicle charging system (100), and
- simultaneously discharging a battery energy storage system (120) of the electric vehicle charging system (100) and the battery (220) of the electric vehicle (200) to the electrical power grid (300) in dependence of the demand for electrical power and the boundary condition.

10. A computer program product comprising machine readable instructions which, when executed by a computer, are arranged to perform a method according to Claim 9.
